# EUROPEAN PATENT SPECIFICATION

(11) **EP 0 739 685 B1**
(45) Date of publication and mention of the grant of the patent: **28.07.1999**
(21) Application number: 96111370.1
(22) Date of filing: 11.01.1990
(51) Int. Cl.: B24B 19/00, B24B 49/04, E01B 35/06, E01B 31/17, G05B 19/42

(54) **Measuring and maintaining the profile of a railroad track trail**
Vermessung und Handhabung eines Eisenbahnschienenprofils
Mesurer et maintenir le profil d'un rail de chemin de fer

(30) Priority: 11.01.1989 US 295910
(43) Date of publication of application: 30.10.1996
(62) Divisional of application: 90902524.9
(73) Proprietor: LORAM MAINTENANCE OF WAY, INC., Hamel Minnesota 55340 (US)
(72) Inventor: Isdahl, Darwin H., Minnesota 55340 (US); Monson, Robert J., Minnesota 55113 (US)
(74) Representative: Strehl Schübel-Hopf & Partner

(56) References cited:
- EP-A- 0 007 227
- EP-A- 0 087 592
- WO-A-83/00738
- FR-A- 2 341 701

## Description

### Background of the Field

This invention relates to the maintenance of railroad track rails. In particular, it relates to a method for measuring the profile of a railroad track rail and for restoring the profile to a preferred configuration.

### Background Art

Railroad track rails are subject to wear due to the passage of trains over the rails. Burrs, corrugations, and uneven wear of the rail head are common deformities created in railroad track rails by the passage of heavy rolling stock over the rails. Unchecked, such wear can lead to rail failure and derailment of trains using the rails.

The replacement of track rails is labor intensive and extremely expensive. Accordingly, specialised rail grinding machines have been developed to restore worn and deformed rails to their original profile. An example of such a rail grinding machine is disclosed in U.S. Patent No. 4,622,781. A grinding stone for use in such grinding machines is disclosed in U.S. Patent No. 4,693,039.

Successful restoration of a rail depends on accurate determination of the defects in the rail profile prior to grinding, proper placement of the grinding stones during the grinding process, and accurate measurement of the rail profile subsequent to grinding. Measurement of rail profiles has traditionally been accomplished with the use of so called star gauges that have a plurality of different radiused edges. An edge of the star gauge that has a radius similar to the desired radius of the measured rail is manually placed on the head of the rail and is visually checked to determine whether any space exists between the star gauge and the rail head. If there is a space (indicating a deformity in the rail profile), grinding stones of a rail grinding machine are set in one of several predetermined, standard grinding patterns, based on the judgement of the machine operator.

It will be appreciated that the traditional, manual method of determining the profile of a railroad track rail is highly subject to measurement inaccuracies and operator skill. Moreover, while use of a star gauge provides at least a qualitative measure of the rail running surface radius, the presence of burrs, gauge wear, and off center alignment of the railhead are subject to only a visual check. Modern rail grinding machines can control grinding to within several hundredths of a millimetre tolerance. The ability to maintain such tight tolerance can be in large part wasted when rail measurement and grinding stone orientation are done by an unskilled or inexperienced operator.

An automated method that would accurately measure the profile of a railroad track rail prior to grinding, and that could be used in a grinding system to set the grinding stones in an optimal orientation for grinding based on the measurement, would provide a decided advantage.

From US-A-4,785,589 a method of measuring and grinding a profile of a railroad track rail with the features included in the first part of claim 1 is known, wherein the actual profile of the rail head is determined by a seven point measurement across the rail head, which is carried out by seven inductive measuring sensors clustered together.

### Summary of the Invention

It is the object of the present invention to provide a method for restoring the rail of a railroad track having an accurate and efficient grinding performance.

This object is met by the invention as set out in claim 1. Preferred embodiments of the invention are covered by the dependent claims.

The method provides an accurate measurement of the profile of a rail that is largely independent of operator judgment or skill.

### Brief Description of the Drawings

Fig. 1 is a perspective view of a section of a typical railroad track rail;
Fig. 2 is an elevational view of the rail depicted in Fig. 1;
Fig. 3 is a plan view of the rail depicted in Fig. 1;
Fig. 4. is an elevational view of an ideal railroad track rail with the profile of a worn track rail indicated in phantom line;
Fig. 5 is an enlarged, elevational view of the railhead of an ideal railroad track rail, with profiles of various worn railheads superimposed thereon in phantom lines;
Fig. 6 is a schematic view of a typical railroad track rail;
Fig. 7 is an enlarged, elevational view of an ideal rail, with a representative worn rail profile and the wheel of a railroad car depicted in phantom lines;
Fig. 8 is a block diagram of the apparatus for measuring and maintaining the profile of a track;
Fig. 9 depicts the light line projected onto the railhead of a railroad track rail by a vision system;
Fig. 10 depicts the light lines projected onto the foot of the rail;
Fig. 11 is a schematic view of a typical railroad track rail indicating the placement of the light beam on the track rail;
Fig. 12 is a front elevational view of a grinding machine having an apparatus for measuring and maintaining the profile of a track rail mounted thereon;
Fig. 13 is a side elevational view of the grinding machine shown in Fig. 12;
Fig. 14 is a sectional view taken along line 14-14 of Fig. 13 depicting the optical front ends of the vision system mounted within an environmental protective container;
Fig. 15 depicts the structure depicted in Fig. 14, but from a top plan view;
Fig. 16 is an enlarged top plane view of an optical front end of the vision system;
Fig. 17 is a sectional, elevational view of the structure depicted in Fig. 16;
Fig. 18 is a flow chart depicting the method for measuring and maintaining the profile of a railroad track rail in accordance with an embodiment of the present invention;
Fig. 19 is a flow chart depicting in greater detail the View Rail Profile step of Fig. 18;
Fig. 20 is a flow chart depicting in greater detail the Place Stones step of Fig. 18; and
Fig. 21 is a schematic diagram of a worn rail profile with an ideal rail profile superimposed thereon, depicting the placing of tangent lines at grinding points along the worn rail profile and the results of grinding at one of the grinding points.

### Detailed Description of the Drawings

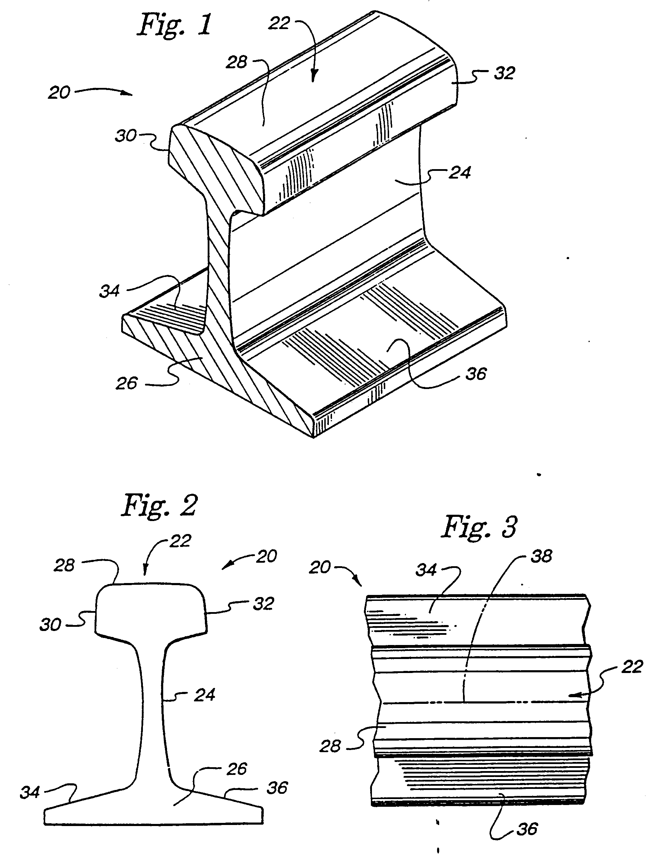

The method for measuring and maintaining the profile of a railroad track rail in accordance with an embodiment of the present invention is best understood in conjunction with a detailed explanation of the structure of a typical railroad track rail 20. Referring to Figs. 1, 2, and 3, a typical rail 20 includes railhead 22, web 24, and foot 26. The railhead 22 includes upper, arcuate, crown surface 28, and opposed head sidewalls 30, 32. Web 24 defines vertical rail centerline c in a vertical center line plane. Crown surface 28 presents a surface radius of about 15 cm to about 36 cm (about 6 inches to about 14 inches), depending upon user specifications. Foot 26 includes opposed, inclined, field side and gauge side upper surfaces 34, 36. The railhead 22, web 24 and foot 26 are preferably symmetrically formed about centerline c.

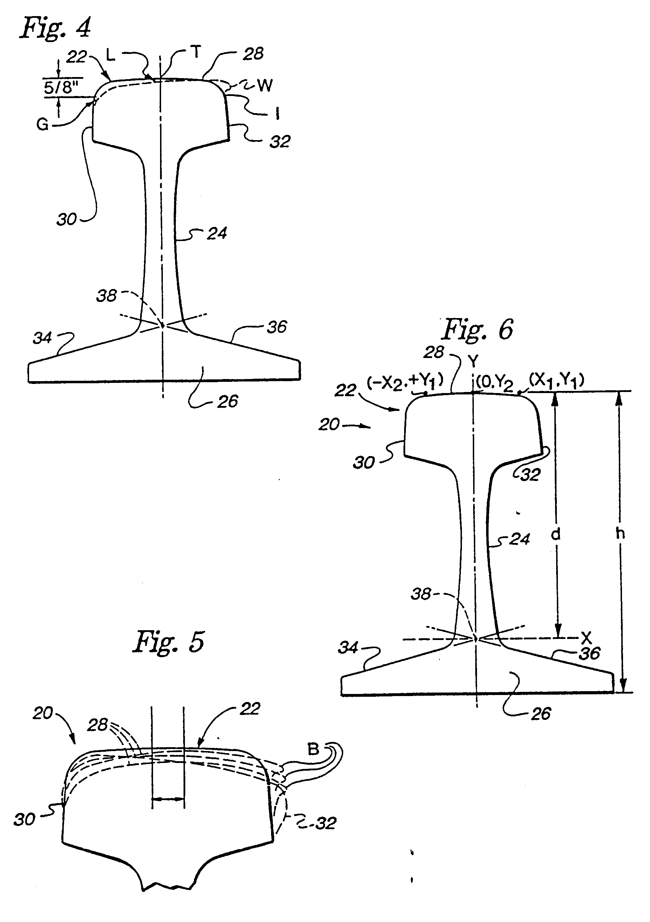

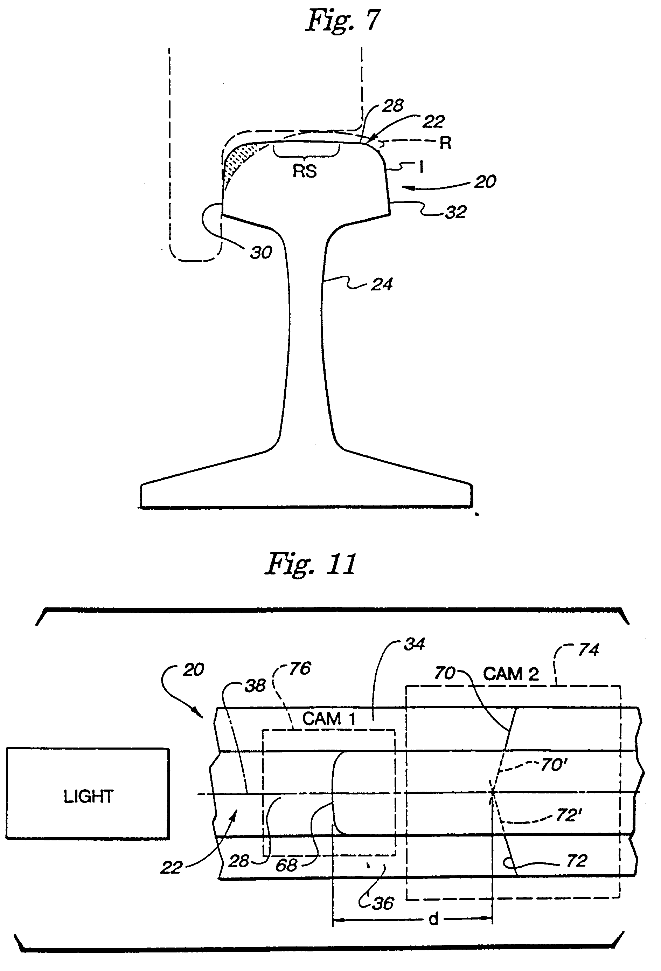

Fig. 4 depicts an ideal railroad track rail I with the profile of a worn rail W superimposed thereon in phantom lines. Headloss L is the vertical difference between the ideal profile I and the worn profile W at the centerline c of the rail. Alternatively, head loss can be measured as the percentage loss of area in a transverse cross section of the head. Gauge wear G is the horizontal difference between the worn rail W and ideal rail I at the gauge side head sidewall 30 of the rail, as measured 1,6 cm (5/8th of an inch) below the top T of the ideal rail profile I. The portion RS of the crown surface 28 which comes into actual contact with the wheels of a railroad car is commonly referred to as the rail running surface (see Fig. 7). Fig. 5 shows the profile of various worn rail configurations in phantom lines, superimposed on the profile of an ideal rail. Note, in particular, the occurrence of burrs B on the field side of the rail.

Referring in particular to Fig. 6, the inclined field side and gauge side foot upper surfaces 34, 36 define planes that intersect along a line 38 in the center line plane. The angle of inclination of the foot upper surfaces is held to an industry standard 14°. Variance of the intersection line 38 from the vertical plane of the centerline c is accordngly less than +/- 0,8 mm (1/32"), and the vertical distance of line 38 above the bottom surface of the rail 20 remains constant to within +/-0,8 mm (1/32 inch). Referring to Fig. 6, the overall height (h) of the rail can therefore accurately be determined if the distance (d) between the crown surface 28 and the line 38 can be accurately determined. Moreover, the line 38 provides an origin for locating points in x and y coordinates on the crown surface 28 of a cross section of the rail 20.

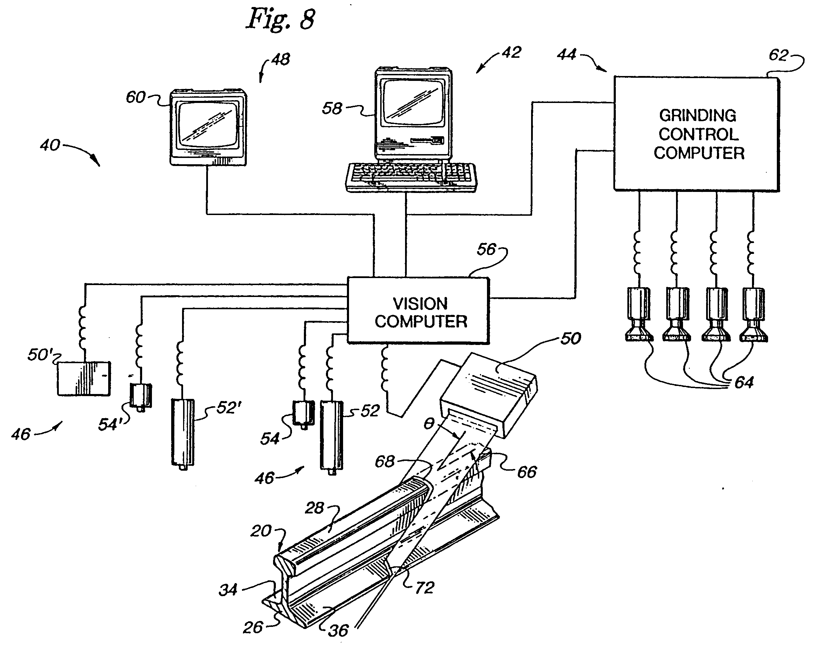

An apparatus 40 for measuring and maintaining the profile of a railroad track rail is designed to take advantage of the above described structure of a track rail. Referring to Fig. 8, the apparatus 40 broadly includes a vision system 42 and a grinding system 44. The vision system 42 includes an optical front end 46 and control section 48. The optical front end 46 includes a strobe light 50, railhead camera 52, and rail foot camera 54. Control section 48 includes vision computer 56, terminal 58, and display 60. A second optical front end 46 having additional cameras 52', 54' and strobe light 50' can be connected to the vision computer 56 for viewing a second rail, or for viewing the same rail in a different position (i.e., behind the grinding modules for immediate evaluation of the grinding process). Grinding system 44 includes grinding control computer 62 and grinding modules 64.

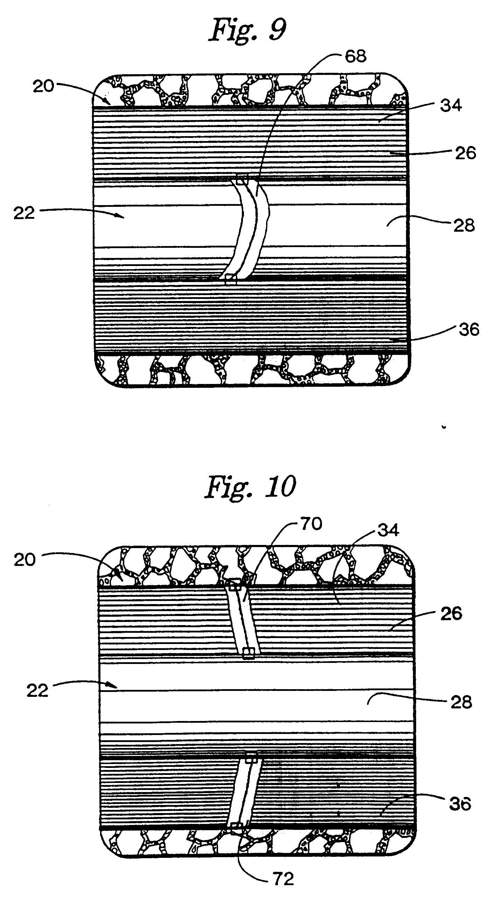

The strobe light 50 is oriented at an angle θ relative to the horizontal, and projects a generally planar beam of light 66 on to rail 20. Referring to Figs. 9, 10, and 11, the reflection of the angled light beam 66 from the rail 20 presents an illuminated, arcuate light line 68 on the railhead 22, and linear light lines 70, 72 on the foot upper surfaces 34, 36. It will be appreciated that the precise configurations of the light lines 68, 70, 72 are a function of the profile of the surfaces of the rail 20.

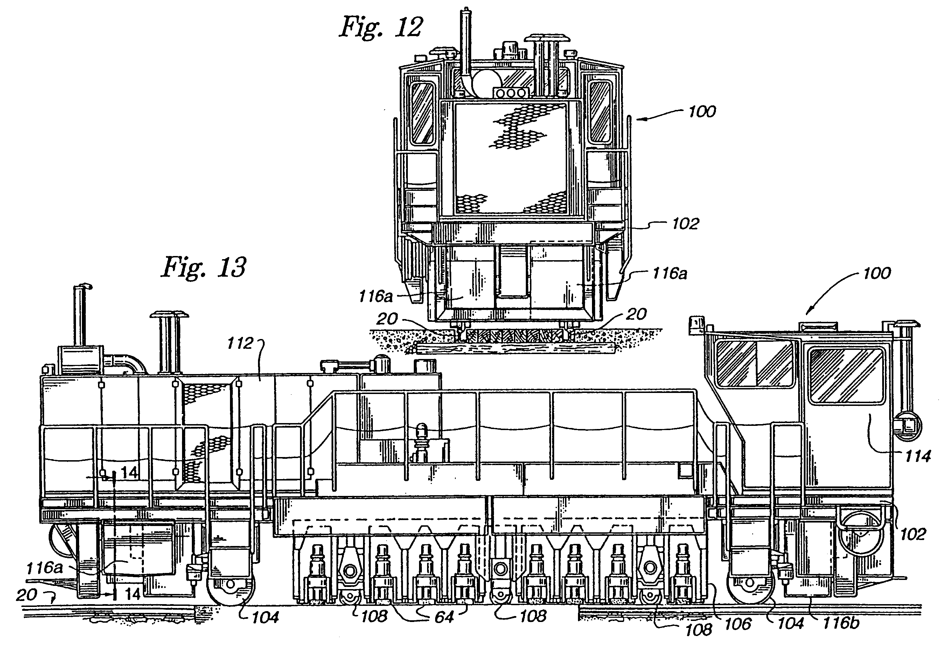

Fig. 11 is a schematic, top plan view of the illuminated lines 68, 70, 72 reflected by the rail 20, as seen by the railhead camera 52 and foot camera 54. The field of view of cameras 52, 54 are indicated by phantom lines 74, 76. Referring to Fig. 11, it will be understood that the extension of linear light lines 70, 72, as depicted by dashed lines 70', 72', intersect at rail centerline L. Moreover, when the strobe light 50 is oriented at a preferred angle of θ = 45°, the horizontal length d (as depicted in Fig. 11) is equal to the vertical height d (as depicted in Fig. 6), since tan 45° = 1. Using the intersection point of extended light lines 70', 72' as a reference, sample points along arcuate light line 68 can be represented in two dimensional, x-y coordinates. The x-y coordinates, as will be discussed in detail below, can be used to compare the actual rail profile to an ideal rail profile, and the comparison data can be used for optimum placement of grinding modules 64.

The apparatus 40 for measuring and maintaining the profile of a rail is depicted as mounted on a grinding machine 100 in Figs. 12 and 13. The rail grinding machine 100 is a self-propelled vehicle having a main frame 102 supported on railroad track rails 20 by rail engaging wheels 104. An undercarriage 106 depends from the main frame 102, and is supported along the railroad track rails 20 by undercarriage rail engaging wheels 108. The plurality of grinding modules 64 are carried by the undercarriage 106. The grinding machine includes an engine compartment 112 and operator's cab 114.

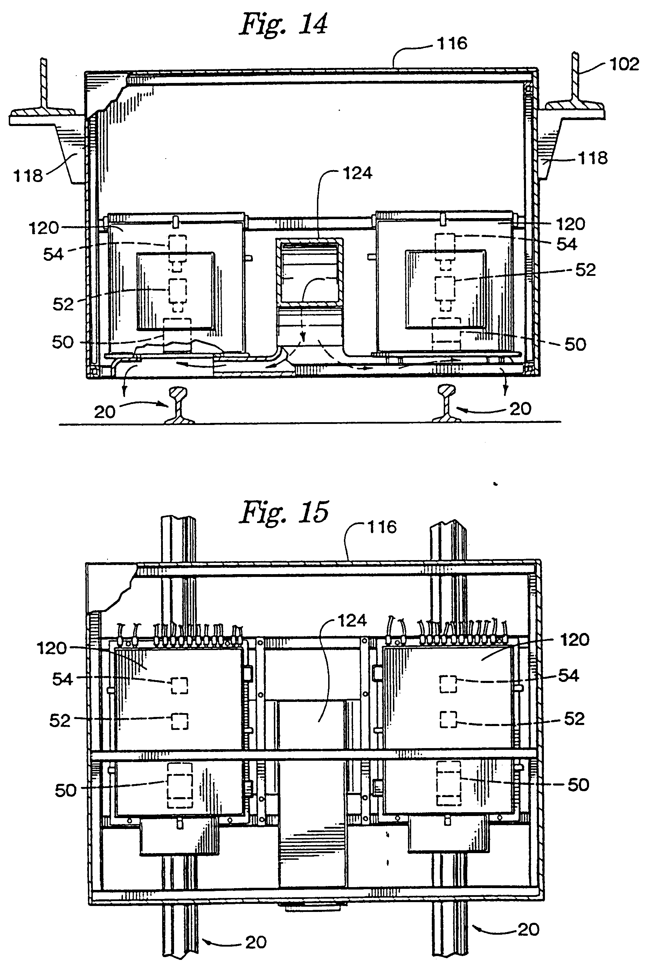

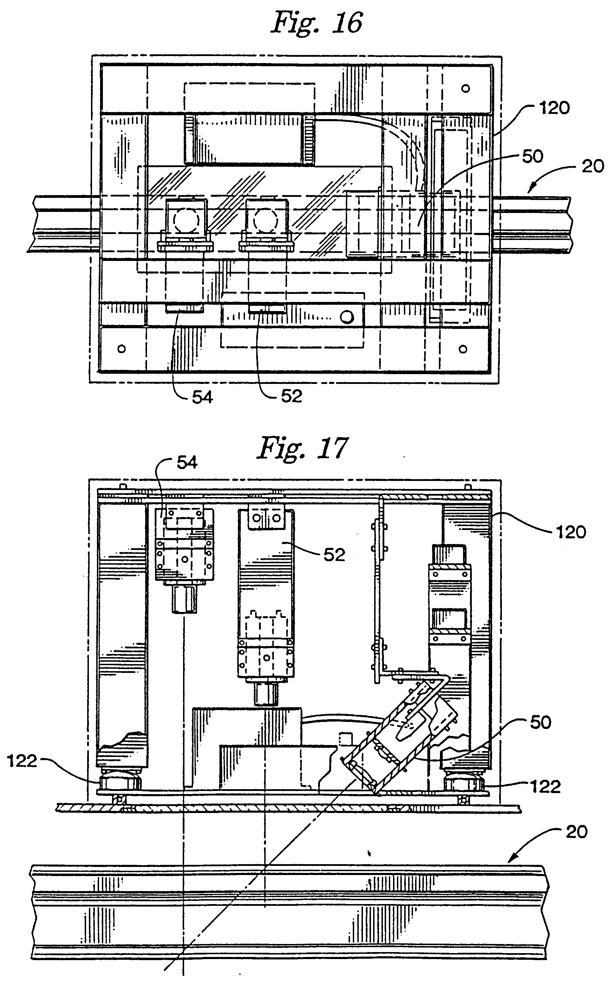

The optical front end 46 of the vision system 42, comprising strobe light 50, and cameras 52, 54, is mounted within an environmental enclosure 116. Referring to Figs. 14-17, a separate optical front end 46 with its own strobe light 50, and separate pair of rail head and rail foot cameras 52, 54 is dedicated to each of the two track rails 20. Moreover, referring to Fig. 13, front and rear environmental enclosures 116a, 116b, each having its own optical front ends 46 can be mounted in front of (116a), and following (116b) the grinding modules 64.

The environmental enclosure 116 provides a temperature controlled, clean environment for the optical front ends 46 of the vision system 42. Enclosure 116 is mounted by brackets 118 to a carriage mounted to the frame 102 of grinding machine 100. The cameras 52, 54 and associated strobe light 50 of each optical front end 46 are contained within an individual optical equipment box 120. Each box 102 is mounted on shock absorbing pads 122 within the enviromental enclosure 116. Ventilation duct 124 provides a path for forced air to travel across the field of view of the cameras 52, 54 and outwardly onto the rails 20, thereby clearing the field of view from dust, dirt, snow, and debris.

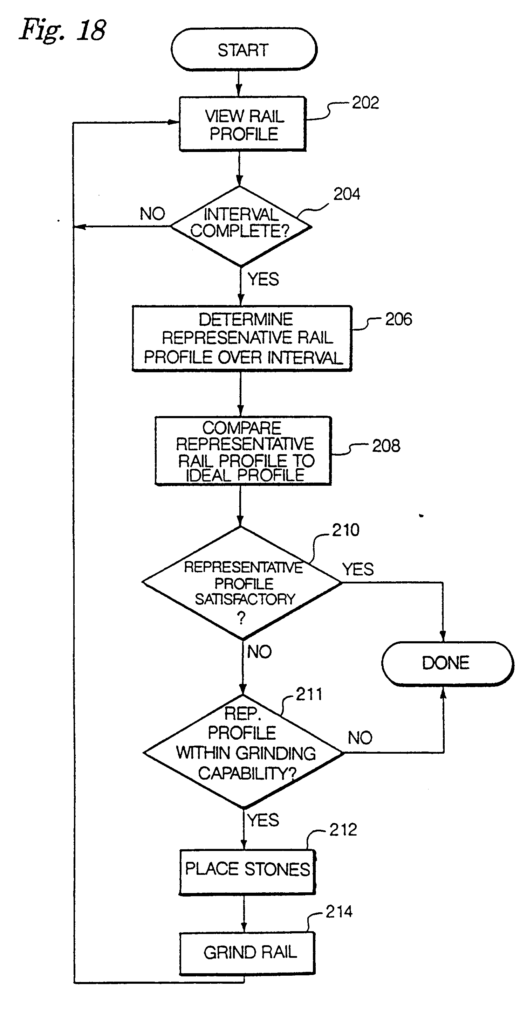

The process for measuring a railroad track rail and restoring the profile of the rail through grinding in accordance with the an embodiment of present invention is depicted in flow chart form in Figs. 18-20.

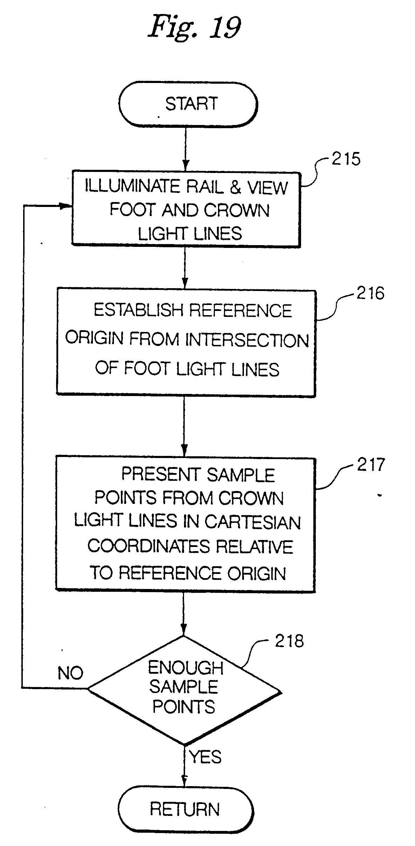

Referring to Fig. 18, the process is begun at program block 202 by using vision system 42 to view a rail 20 to determine the rail profile. The view rail profile step is discussed in detail below, and is depicted in greater particularity in Fig. 19.

Program flow is directed from the view rail profile step 202 to decision block 204 for determination of whether enough profiles over a given interval of railroad track rail have been acquired to compute a representative rail profile for the interval. The determination of whether enough profiles have been taken to comprise a complete interval can be done in one of two ways. In the first method, a predetermined number of rail profiles can be chosen to comprise a complete interval. Once the appropriate number of profiles have been accepted, program flow would be directed to block 206 for determination of a representative rail profile over the interval. In this regard, it will be appreciated that the profile of a rail will change along the length of the rail. A "representative rail profile" could be an average of each of the profiles taken along the interval, a median of the profiles, a least square's fit, or any other numerical analysis of the profiles within the given interval.

The second method for computing an acceptable representative profile is to compute the representative profile on the fly from each of the rail profiles as they are acquired. An "interval" would be considered as complete once the trend of the representative profile becomes constant.

With either method, a new rail profile will be viewed at generally evenly spaced lengths (such as every 91 cm (36") along the railroad track rail, and the viewed rail profiles will be manipulated to present a representative profile at least every 11,9 m (39 feet), 11,9 m) (39 feet) being the length of a typical railroad track rail in a jointed railroad track system).

Moreover, viewing of the rail profile is a continuous process. The optical front end 46 in the enclosure 116b at the rear of the grinding machine 100 can be used to prepare a representative rail profile for a second grinding pass as the rail is ground during a first forward grinding pass of the machine 100 over the rail.

Once a representative rail profile for an interval of railroad track is determined, program flow is directed to block 208 where the representative rail profile is compared to the profile of an ideal rail. The comparison is made in order to determine what metal should be removed to restore the viewed rail's profile to an ideal shape. The definition of an "ideal" profile can depend on the kind of terrain over which the railroad track is laid, the type of loads carried by trains using the railroad track, or on whether the rails of the track are on a straightaway, a curve, or a switch. Moreover, individual railroad companies may have differing criteria for the shape of an "ideal" rail. The differing descriptions of what an "ideal" rail profile comprises can each be stored in the memory of grinding control computer 62 and can be retrieved from memory as needed.

The step of comparing the representative rail profile to an ideal profile is best understood with reference to Fig. 7. In Fig. 7, a representative rail profile R as measured by the vision system 42 and determined by the grinding control computer 62 is depicted in phantom lines. Also depicted in phantom lines is the wheel of a railroad car shown resting on the representative rail profile. An ideal rail I is superimposed on the representative rail profile R by first aligning the gauge points of the representative and ideal profiles. The ideal rail profile is then shifted downwardly relative to the representative rail profile R so that all points of the running surface RS on the ideal profile I lie on or below the representative rail profile R. The reasons for so aligning the ideal and representative profiles is that metal must be ground away from the representative rail profile in order for the representative rail profile to approximate the ideal profile; it is not possible to add metal to build up the worn rail. Moreover, it is only along the actual running surface RS, and the gauge sidewall 30, that the ideal and representative rail profile must be aligned as described above, since those are the only places where the wheel of a railroad car actually makes contact with the rail.

Program flow is next directed to decision block 210 where it is determined whether the railroad track rail, as described by the representative profile of the rail, requires grinding. If the rail profile is satisfactory, and no grinding needs to be done, the process ends. If grinding is required, program flow is directed from block 210 to decision block 211 where it is determined whether the representative rail profile can be corrected through grinding. If the rail is so deformed that grinding would not materially improve the rail profile, the process is complete, and the rail must be replaced. If it is determined in decision block 211 that the rail profile can be improved through grinding, program flow is directed to block 212 for placement of the grinding modules 64 of the rail grinding machine 100. Program flow is next directed to block 214 where the rails are ground along the measured interval. Once grinding is complete, program flow is redirected to block 202 to again view the rail along the interval for determination of whether more grinding is required.

The view rail profile step of block 202 is depicted with greater particularity in Fig. 19.

The railroad rail 20 is first illuminated by the strobe 50 of vision system 42 in block 215. Program flow is next directed to block 216 where the intersection of the rail footlight lines 70, 72 is used to establish a reference origin. Program flow is then directed to block 217 where a number of sample points across the crown surface 28 of railroad track rail 20 are represented in Cartesian coordinates relative to the reference origin established in block 216. Alternatively, one of the sample points can be selected as a reference point for establishing the relative portion or the other points. While the number of points selected is somewhat arbitrary, fifty data points across the crown surface 28 of the rail 20 provides an adequate description of the surface of the rail 20 without unduly complicating the calculation of the representative rail profile in block 206. The fifty points across the crown surface 28 are not necessarily evenly spaced, but are more advantageously concentrated around the edges of the rail where the curvature of the rail changes the most.

Program flow is next directed from block 217 to decision block 218 where it is determined whether enough valid sample points across the crown surface 28 of the rail were obtained in an individual illumination (or vision frame) of the rail. In this regard, an obstruction, such as a rock or other foreign object, may be lying across the rail at the point of illumination, preventing a full set of valid sample points from being obtained from a particular vision frame. If enough sample points are not obtained, the vision frame is discarded and another illumination of the rail 20 immediately takes place. If a satisfactory number of sample points are obtained from a vision frame, program flow is returned from block. 218 to decision block 204 of Fig. 18 for a determination of whether enough valid vision frames have been acquired to make up a valid interval.

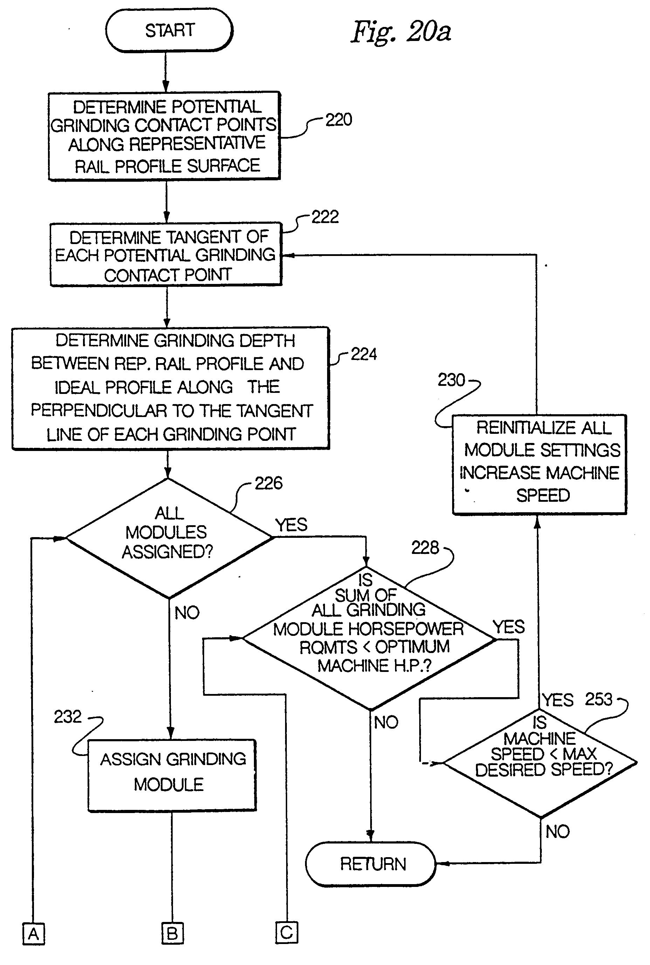

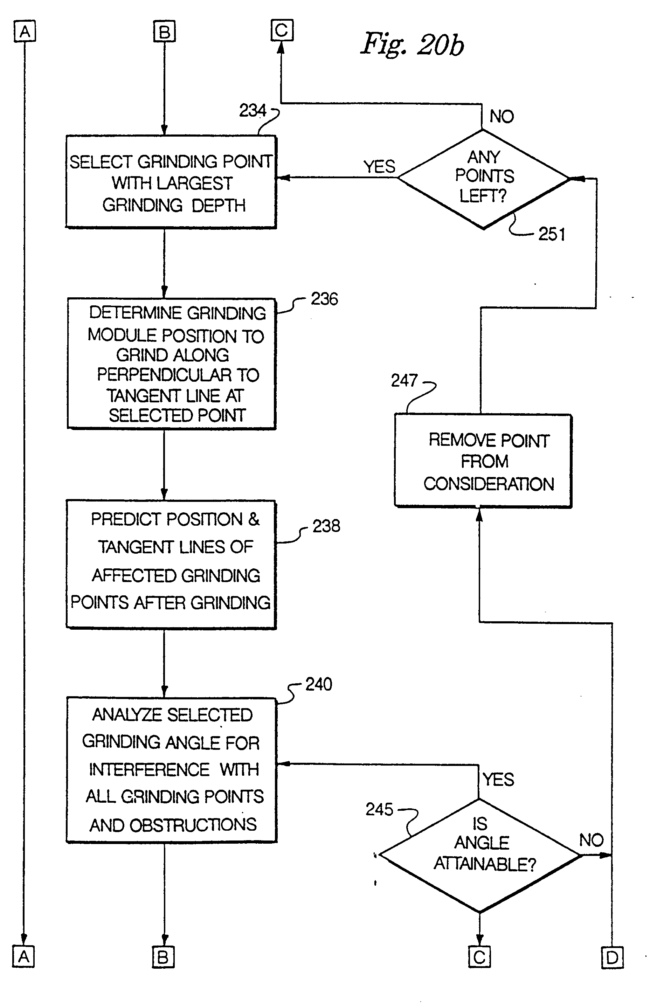

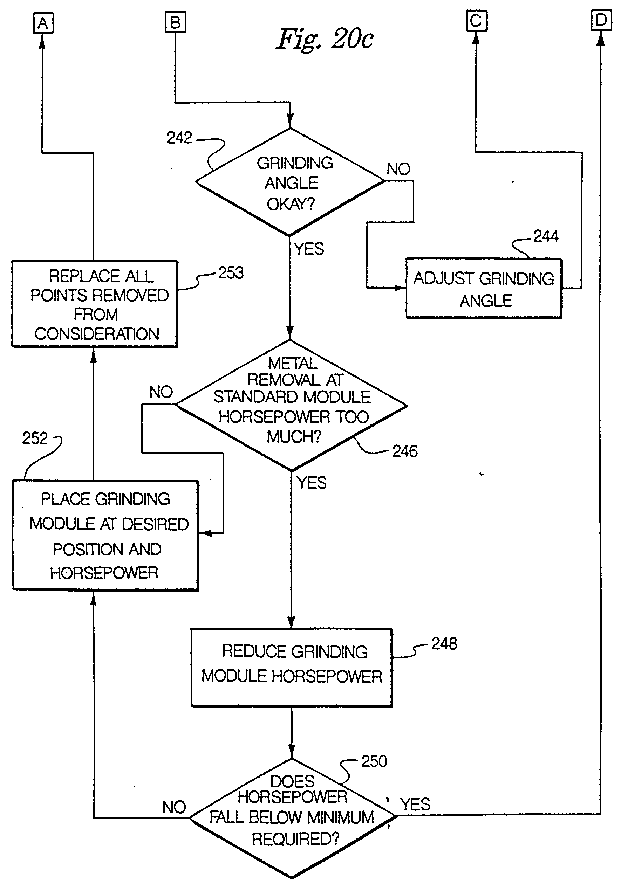

The place stone step of block 212 is set forth in greater particularity in Fig. 20.

The process of placing grinding stones is begun at block 220 by assigning a predetermined number of potential grinding contact points along the representative rail profile surface. The grinding contact points are analogous to the sample points described above in conjunction with the view rail profile step of block 202. The sample points, however, relate to the actual, viewed profile of a vision frame. The grinding contact points relate to the representative rail profile, which is the result of the numerical analysis of all of the vision frames in a given interval.

Program flow is next directed to block 222 where the tangent of each grinding point is determined. The grinding depth between the representative rail profile and the ideal rail profile along the perpendicular to the tangent line of each grinding point is then determined in block 224.

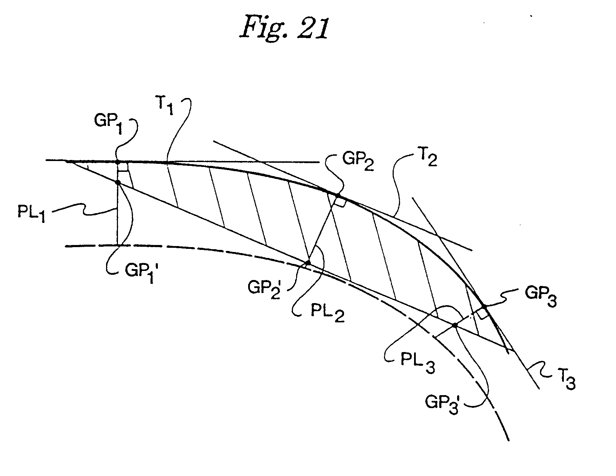

The steps of program blocks 222 and 224 are best understood with reference to Fig. 21. Three grinding points GP along a representative rail profile R are depicted in Fig. 21. The tangent lines, T1, T2, T3, for each of the grinding points GP1, GP2, GP3 are also depicted. While there are a variety of angles that a stone can be placed into contact with a particular grinding point, placing the stone of a grinding module along the tangent to the grinding point is considered as the most efficient orientation of the grinding module. The tangent for each grinding point is determined by taking a point to the left and to the right of each grinding point, calculating the slopes of the three lines defined by the three points, and then averaging the three slopes. The perpendicular line PL1, PL2, PL3 is then calculated for each tangent line SP1, SP2, SP3. The length of each perpendicular line PL between the representative profile and the ideal profile is then calculated as the grinding depth.

Program flow is directed from block 224 to decision block 226 where it is determined whether there are grinding modules 64 available. If all grinding modules 64 hake been assigned, the program flow is directed to block 228, described in detail below. If there are grinding modules 64 remaining for assignment, program flow is directed to block 232 for the assignment of a grinding module. Once a grinding module 64 is assigned, program flow is directed to block 234 to begin the determination of the appropriate grinding point and grinding angle for the assigned grinding module.

The grinding point having the largest grinding depth, as measured along the perpendicular line PL to its tangent T, is selected as the grinding point for the assigned grinding module. If only a limited number of passes over the rail 20 by the grinding machine 100 can be made, choosing the grinding points in descending order of grinding depth ensures that at least the worst portions of the rail profile will be ground. Alternatively, it may be decided in advance that, for instance, burrs along portions of the field side of the rail need not be ground. In that case, grinding points at the predetermined positions will not be considered for grinding, regardless of their grinding depth relative to the other grinding points. Program flow is next directed to block 236 where the tangent line to the grinding point selected in block 234 is determined as the preferred grinding angle for the assigned grinding module.

Program flow is next directed to block 238 where the grinding control computer 62 predicts how much surface area of the rail 20 will be removed by grinding at the selected point and angle in one pass of the grinding machine 100 along the rail being ground. Moreover, the new position and tangent lines of the grinding points affected by one pass of the selected grinding module are predicted in block 238. The prediction step of block 238 can be understood with reference to Fig. 21, where the predicted positions of grinding points GP1, GP2, GP3 are depicted as GP1', GP2', and GP3'. Referring to Fig. 13, it will be appreciated that the grinding modules 64 are lined up one behind the other. The prediction step of block 238 is carried out so that the orientation of trailing grinding modules will be based on what the profile of the rail 20 is likely to be after grinding is accomplished by a leading grinding module.

Program flow is next directed to block 240, where it is determined whether the results of grinding, as predicted in block 238, will cause interference with known obstructions (such as at a switch or crossing in the railroad track), or whether grinding at the proposed angle will remove more material than desired at any of the grinding points due to gross irregularities in the rail profile or the like. Program flow is next directed to decision block 242 where the results of the analysis in block 240 are queried to determine whether the angle selected is satisfactory. If the grinding angle is not satisfactory, program flow is directed to block 244 where the grinding angle is adjusted to avoid the obstruction or to avoid the interference determined to exist at block 240. Program flow is then directed to decision block 245 to determine whether the adjusted angle can be attained by the assigned grinding module. If the adjusted angle is attainable, program flow is redirected to block 240 to analyze whether the new, adjusted angle avoids interference and obstructions.

Once an acceptable grinding angle for the assigned grinding module is selected, program flow is directed from decision block 242 to decision block 246. Block 246 determines whether too much metal will be removed from the railhead by grinding the rail with the grinding module operating at standard horsepower and at the selected angle. If too much metal will be removed (i.e., the rail 20 will be ground below the ideal profile) program flow is directed to the block 248 where the horsepower to the assigned grinding module is reduced, it being understood that operation of a module at reduced horsepower will remove less metal from the railhead. Program flow is then directed to decision block 250 where it is determined whether the reduced horsepower falls below the minimum required horsepower to operate the grinding module.

Program flow is directed from decision block 246 to block 252 if it is determined that grinding at standard horsepower will not remove too much metal from the railhead. Program flow will also be directed to block 252 from block 250 if it is determined that reducing the horsepower to the selected grinding module does not bring the horsepower level below the minimum required to operate the grinding module. At block 252, the calculated grinding angle and grinding horsepower for the selected module are stored in computer memory. Program flow is then directed to block 253 where any of the grinding points removed from consideration in block 247 (to be described below) are replaced, and program flow is directed to block 226 for the assignment of further grinding modules.

Program flow is directed to block 247 from either decision block 245 or 250 if it is determined that either the selected grinding angle (block 245) or the horsepower requirements for the grinding module (block 250) are not within acceptable limits. The grinding point for which the angle or horsepower requirements is unacceptable is removed from consideration at block 247. Once the grinding point had been removed from consideration, program flow is directed to decision block 251 to determine whether there are further grinding points for consideration. If there are grinding points remaining, program flow is redirected to block 234 for selection of another grinding point. It will be appreciated that the grinding module previously selected in block 232 is still available for assignment to a selected grinding point. Since the previously considered grinding point was removed from consideration in block 247, the grinding point with the next largest grinding depth will now be selected at block 234.

Program flow will be directed from block 226 to block 228 once it is determined that all the grinding modules of grinding machine 100 have been assigned for grinding. At decision block 228, tee grinding horsepower requirements of the individual grinding modules are summed to determine whether the sum of the grinding module horsepower requirements is less than or equal to the optimum grinding machine horsepower. In other words, decision block 228 determines whether the programmed grinding operation will make use of all of the available grinding machine horsepower. If the power requirement is determined to be at the optimum horsepower, program flow is directed to block 214 (Fig. 18) for grinding of the rail. If horsepower requirements fall below the optimum, program flow is directed from block 228 to decision block 253, where it is determined whether the speed of the grinding machine 100 over the rails is less than the maximum desired speed for grinding operations. If machine speed is not less than the maximum desired speed, program flow is returned to block 214 for commencement of the grinding operation.

Assuming that the horsepower demands of the grinding modules will be less than the optimum available machine horsepower, and further assuming that machine speed can be increased, program flow will be directed from decision block 253 to block 230 where all grinding module settings are reinitialized, and the grinding machine speed is increased. In this regard, it will be appreciated that the amount of metal removed from a rail is a function of both the horsepower of the individual grinding module, and the speed with which the grinding module is carried across the rail. As the speed of the grinding module over the rail increases, grinding module horsepower must be increased to effect the same amount of metal removal. Increasing machine speed will therefore increase grinding module horsepower requirements. In the situation where the programmed grinding operation does not use all of the available machine horsepower, the same amount of grinding can be accomplished in a shorter time by increasing grinding machine speed and proportionately increasing the operating power of the grinding modules.

## Claims

1. A method for restoring the rail (20) of a railroad track having a worn rail profile, said rail presenting a rail length extending along a rail longitudinal axis and comprising a rail foot (26) having inclined gauge side and field side foot upper surfaces (34, 36), an uppermost railhead and an intermediate web (24) defining a rail centerline extending between said rail foot and said rail head, said method including the steps of
acquiring (202, 206) a plurality of a number of sample points, i.e. data frames of the actual profile of the rail at a plurality of positions spaced apart along an interval of the length of said rail,
comparing (208) said rail profile to an ideal rail profile to determine the differences between said rail profile and the ideal rail profile along said interval, and
grinding (212, 214) said rail along said interval to reduce said differences between said rail profile and said ideal rail profile,
**characterised in that**
said step of acquiring (202, 206) a plurality of data frames including the steps of
illuminating (215) the rail with a generally planar beam of light to present a railhead light line and gauge side and field side foot light lines,
establishing (216) a reference origin from the intersection of the extension of said foot light lines,
determining (217) the position of sample points along said railhead light line relative to said reference origin, and
computing (206) a single representative rail profile over said rail interval from said data frames.

2. The method as claimed in claim 1, including the steps of determining (204) when the number of said plurality of acquired data frames is adequate by the steps of selecting a predetermined number of data frames as comprising an adequate number of frames, and comparing the number of frames acquired to said predetermined number.

3. The method as claimed in claim 1, including the steps of determining (204) when the number of said plurality of acquired data frames is adequate by the steps of computing an intermediate representative rail profile as each of said plurality of data frames is acquired and determining when the trend of said intermediate profile approaches a constant.

4. The method as claimed in any of claims 1 to 3, wherein said step of grinding (212, 214) said rail along said interval includes the steps of selecting (220) a number of potential grinding contact points from said representative rail profile, determining (222, 224) the grinding depths between said potential grinding contact points and said ideal rail profile, and grinding said rail at the grinding contact point having the greatest depth to said ideal rail profile.

5. The method as claimed in any of claims 1 to 4, wherein said step of determining the grinding depths includes the steps of determining (222) the tangents of said potential grinding contact points, and determining (224) said grinding depths normal to said tangents.

6. The method as claimed in any of claims 1 to 5, wherein said step of grinding (212, 214) said rail includes the step of grinding contact point having the greatest depth to said ideal rail profile for grinding of said rail.

7. The method as claimed in claim 6, wherein said step of grinding (212, 214) said rail further includes the steps of redetermining (238) the grinding depths of the remaining potential grinding contact points based on a prediction of the effect of grinding said rail at said first grinding contact point with a first module, positioning a second grinding module at a second grinding contact point having a grinding depth next largest to the grinding depth of said first grinding contact point, and grinding said rail at said first and second grinding contact points.

8. The method as claimed in any of claims 1 to 7, wherein said grinding modules are carried by a grinding vehicle (100) adapted for travelling along said rail (20) and having a predetermined optimum grinding speed of travel along said rail, said method including the steps of determining (228) the power requirement of grinding said rail with said grinding modules, and increasing (253, 230) the speed of said grinding vehicle during said grinding step if the power requirement of said grinding modules is less than a predetermined optimum power requirement.

9. The method as claimed in any of claims 1 to 8, including the steps of determining (246) the amount of metal that will be removed from said rail by grinding said rail at said selected point along said profile at a predetermined normal grinding rate, and reducing (248) said grinding rate if the amount of metal removed at said normal rate is more metal than required to restore said rail to said ideal profile.

10. The method as claimed in claim 9, including the steps of determining (250) whether said reduced grinding rate is less than a predetermined required rate prior to grinding said rail at said selected point along said rail profile, and refraining (247) from grinding said rail at said point if said reduced grinding rate is less than said predetermined required rate.

11. The method as claimed in any of claims 1 to 10, including the steps of acquiring (202) a second plurality of data frames of the actual profile of said rail along said interval after said grinding of said rail, recomputing said representative rail profile from said second plurality of data frames, and comparing said recomputed representative rail profile to said ideal rail profile.

12. The method as claimed in claim 11, wherein said steps of grinding and acquiring said second plurality of data frames are accomplished in a first pass along said interval in a first direction along said rail, and said step of regrinding is accomplished in a second pass along said interval in a second, opposite direction along said rail.

13. The method as claimed in any of claims 1 to 12, wherein said representative rail profile and said ideal rail profile each present a respective gauge sidewall and an upper running surface, said steps of comparing (208) said representative rail profile to said ideal rail profile including the steps of aligning said representative rail profile and ideal rail gauge sidewalls, and aligning the running surface of the ideal rail profile relative to the running surface of said representative rail profile such that all points of the ideal rail profile are on or below the running surface of the representative rail profile.

14. The method as claimed in any of claims 1 to 13, wherein said rail presents a rail head surface, said step of acquiring (202) said data frames including the step of representing the rail at each of said positions as a number of sample points, said step of computing (206) said representative rail profile including the steps of determining whether the number of valid sample points for each said position is adequate to represent the rail profile at that position, and discarding data frames wherein said number of valid sample points is deficient.

## Patentansprüche

1. Verfahren zum Wiederherstellen der Schiene (20) eines Eisenbahngleises mit einem abgenutzten Schienenprofil, wobei die Schiene sich als eine Schienenlänge darstellt, die sich längs einer Schienenlängsachse erstreckt, und einen Schienenfuß (26) mit geneigten Spurseiten- und Feldseiten-Fußflächen (34, 36), einem oberen Schienenkopf und einem Zwischensteg (24), der eine Schienenmittellinie, die sich zwischen Schienenfuß und Schienenkopf erstreckt, festlegt, aufweist, mit den Verfahrensschritten:
Gewinnen (202, 206) einer Vielzahl von Probenpunkten, d.h. Datensätzen des aktuellen Schienenprofils an einer Vielzahl von Positionen, die voneinander längs eines Intervalls von der Länge der Schiene beabstandet sind,
Vergleichen (208) des Schienenprofils mit einem idealen Schienenprofil, um die Unterschiede zwischen dem Schienenprofil und dem idealen Schienenprofil längs des Intervalls zu bestimmen, und
Abschleifen (212, 214) der Schiene längs des Intervalls, um die Unterschiede zwischen dem Schienenprofil und dem idealen Schienenprofil zu verringern,
**dadurch gekennzeichnet,** daß
beim Gewinnen (202, 206) einer Vielzahl von Datensätzen die Verfahrensschritte ausgeführt werden:
Beleuchten (215) der Schiene mit einem im wesentlichen ebenen Lichtstrahl, um eine Schienenkopf-Lichtlinie, eine Spurseite- und eine Feldseiten-Fußlichtlinie darzustellen,
Einrichten (216) eines Referenzpunktes aus der Überschneidung der Verlängerungen der Fußlichtlinien,
Bestimmen (217) der Position der Probenpunkte längs der Schienenkopf-Lichtlinie in bezug auf den Referenzpunkt und
Berechnen (206) eines einzelnen repräsentativen Schienenprofils über das Schienenintervail aus den Datensätzen.

2. Verfahren gemäß Anspruch 1, wobei bestimmt wird (204), wenn die Anzahl der gewonnenen Datensätze ausreichend ist durch Auswählen einer vorbestimmten Anzahl von Datensätzen als eine ausreichende Anzahl von Sätzen und Vergleichen der Anzahl der gewonnenen Sätze mit der vorbestimmten Anzahl.

3. Verfahren gemäß Anspruch 1, wobei bestimmt wird (204), wenn die Anzahl der gewonnenen Datensätze ausreichend ist durch Berechnen eines vorläufigen repräsentativen Schienenprofils, wenn jede der Vielzahl von Datensätzen gewonnen ist, und durch Bestimmen, wenn die Entwicklung des vorläufigen Profils konstant wird.

4. Verfahren gemäß einem der Ansprüche 1 bis 3, wobei beim Abschleifen (212, 214) längs des Intervalls eine Zahl von möglichen Schleifkontaktpunkten aus dem repräsentativen Schienenprofil ausgewählt wird (220), die Schleiftiefen zwischen den möglichen Schleifkontaktpunkten und dem idealen Schienenprofil bestimmt wird (222, 224) und die Schiene am Schleifkontaktpunkt mit der größten Tiefe in bezug auf das ideale Schienenprofil abgeschliffen wird.

5. Verfahren gemäß einem der Ansprüche 1 bis 4, wobei beim Bestimmen der Schleiftiefen die Tangenten der möglichen Schleifkontaktpunkte bestimmt werden (222) und die Schleiftiefen als eine Normale zu diesen Tangenten bestimmt werden (224).

6. Verfahren gemäß einem der Ansprüche 1 bis 5, wobei beim Schleifen der Schiene (212, 214) der Schleifkontaktpunkt mit der größten Tiefe in bezug auf das ideale Schienenprofil zum Schleifen der Schiene abgeschliffen wird.

7. Verfahren gemäß Anspruch 6, wobei beim Schleifen (212, 214) der Schiene die Schleiftiefen der verbleibenden potentiellen Schleifkontaktpunkte auf der Grundlage einer Vorhersage der Wirkung des Schleifens auf die Schiene an dem ersten Schleifkontaktpunkt mit einem ersten Modul neu bestimmt wird (238), ein zweites Schleifmodul an einem zweiten Schleifkontaktpunkt mit einer Schleiftiefe positioniert wird, die die nächst größte in bezug auf die Schleiftiefe des ersten Schleifkontaktpunktes ist, und die Schiene an den ersten und zweiten Schleifkontaktpunkten abgeschliffen wird.

8. Verfahren gemäß einem der Ansprüche 1 bis 7, wobei die Schleifmodule von einem Schleiffahrzeug (100) getragen werden, das zum Fahren längs der Schienen (20) geeignet ist und eine vorbestimmte optimale Schleif-Reisegeschwindigkeit längs der Schiene hat, wobei das Verfahren weiter die Verfahrensschritte enthält: Bestimmen (228) der Energie, die zum Schleifen der Schiene mit den Schleifmodulen erforderlich ist, und Steigern (253, 230) der Geschwindigkeit des Schleiffahrzeugs während des Schleifschritts, wenn die Energieanforderung der Schleifmodule geringer ist als eine vorbestimmte optimale Energieanforderung.

9. Verfahren gemäß einem der Ansprüche 1 bis 8, wobei der Metallbetrag bestimmt wird (246), der von der Schiene abgetragen wird, durch Schleifen der Schiene an dem ausgewählten Punkt entlang des Profils bei einer vorbestimmten normalen Schleifrate und die Schleifrate verringert wird (248), wenn der bei einer normalen Rate abgetragene Metallbetrag größer ist als zum Wiederherstellen der Schiene mit einem idealen Profil erforderlich ist.

10. Verfahren gemäß Anspruch 9, wobei bestimmt wird (250), ob die verringerte Schleifrate geringer ist als die vorbestimmte erforderliche Rate vor dem Schleifen der Schiene an dem ausgewählten Punkt entlang des Schleifprofils und wobei vom Schleifen der Schiene an dem Punkt abgesehen wird (247), wenn die reduzierte Schleifrate geringer ist als die vorbestimmte erforderliche Rate.

11. Verfahren gemäß einem der Ansprüche 1 bis 10, wobei eine zweite Vielzahl von Datensätzen des aktuellen Profils der Schiene längs des Intervalls nach dem Schleifen der Schiene aufgenommen wird (202), das repräsentative Schienenprofil aus der zweiten Vielzahl von Datensätzen neu berechnet wird, und das neu berechnete repräsentative Schienenprofil mit dem idealen Schienenprofil verglichen will.

12. Verfahren gemäß Anspruch 11, wobei das Schleifen und Aufnehmen der zweiten Vielzahl von Datensätzen in einem ersten Vorbeifahren längs des Intervalls in eine erste Richtung entlang der Schiene ausgeführt wird und das Neuschleifen in einem zweiten Entlangfahren längs des Intervalls in eine zweite entgegengesetzte Richtung längs der Schiene ausgeführt wird.

13. Verfahren gemäß einem der Ansprüche 1 bis 12, wobei das repräsentative Schienenprofil und das ideale Schienenprofil jeweils durch eine Spurseitenwand und eine obere Lauffläche dargestellt werden, wobei beim Vergleichen (208) des repräsentativen Schienenprofils mit dem idealen Schienenprofil die repräsentative Schienenprofil- und idealen Schienenspurseitenwände ausgerichtet werden, und die Lauffläche des idealen Schienenprofils relativ zur Lauffläche des repräsentativen Schienenprofils ausgerichtet wird, so daß alle Punkte des idealen Schienenprofils auf oder unter der Lauffläche des repräsentativen Schienenprofils sich befinden.

14. Verfahren gemäß einem der Ansprüche 1 bis 13, wobei die Schiene sich als eine Schienenkopffläche darstellt und beim Aufnehmen (202) der Datensätze die Schiene an jeder Position als eine Anzahl von Probenpunkten dargestellt wird, und wobei beim Berechnen (206) des repräsentativen Schienenprofils bestimmt wird, ob die Zahl der gültigen Probenpunkte für jede Position ausreichend ist, das Schienenprofil an dieser Position darzustellen und Datensätze abgelegt werden, wobei die Zahl der gültigen Probenpunkte ungenügend ist.

## Revendications

1. Procédé pour restaurer un rail (20) d'une voie de chemin de fer ayant un profil de rail usé, ledit rail présentant une longueur de rail s'étendant le long d'un axe longitudinal de rail et comportant un pied de rail (26) ayant des surfaces supérieures de pied inclinées (34, 36) côté intérieur et côté extérieur, un champignon de rail, le plus en dessus, et une âme intermédiaire (24) définissant une ligne centrale de rail s'étendant entre ledit pied de rail et ledit champignon de rail, ledit procédé comportant les étapes consistant à :
acquérir (202, 206) une pluralité d'un certain nombre de points d'échantillonnage c'est-à-dire des images de données du profil réel du rail à une pluralité de positions espacées le long d'un intervalle de la longueur dudit rail,
comparer (208) ledit profil de rail à un profil de rail idéal pour déterminer les différences entre ledit profil de rail et le profil de rail idéal le long dudit intervalle, et
meuler (212, 214) ledit rail le long dudit intervalle pour réduire lesdites différences entre ledit profil de rail et ledit profil de rail idéal, caractérisé en ce que ladite étape consistant à acquérir (202, 206) une pluralité d'images de données comporte les étapes consistant à :
éclairer (215) le rail à l'aide d'un faisceau de lumière de manière générale plan pour présenter une ligne lumineuse de champignon de rail et des lignes lumineuses de pied côté intérieur et côté extérieur,
établir (216) une origine de référence à partir de l'intersection de l'étendue desdites lignes lumineuses de pied,
déterminer (217) la position de points d'échantillonnage le long de ladite ligne lumineuse de champignon de rail par rapport à ladite origine de référence, et
calculer (206) un profil de rail représentatif unique sur ledit intervalle de rail à partir desdites images de données.

2. Procédé selon la revendication 1, comportant les étapes consistant à déterminer (204) lorsque le nombre de ladite pluralité d'images de données acquises est adéquat par les étapes consistant à sélectionner un nombre prédéterminé d'images de données comme comportant un nombre adéquat d'images, et comparer le nombre d'images acquises audit nombre prédéterminé.

3. Procédé selon la revendication 1, comportant les étapes consistant à déterminer (204) lorsque le nombre de ladite pluralité d'images de données acquises est adéquat par les étapes consistant à calculer un profil de rail représentatif intermédiaire lorsque chacune de ladite pluralité d'images de données est acquise et déterminer lorsque la tendance dudit profil intermédiaire approche d'une constante.

4. Procédé selon l'une quelconque des revendications 1 à 3, dans lequel ladite étape consistant à meuler (212, 214) ledit rail le long dudit intervalle comporte les étapes consistant à sélectionner (220) un certain nombre de points de contact de meulage potentiels à partir dudit profil de rail représentatif, déterminer (222, 224) les profondeurs de meulage entre lesdits points de contact de meulage potentiels et ledit profil de rail idéal, et meuler ledit rail au point de contact de meulage ayant la profondeur la plus grande jusqu'audit profil de rail idéal.

5. Procédé selon l'une quelconque des revendications 1 à 4, dans lequel ladite étape consistant à déterminer les profondeurs de meulage comporte les étapes consistant à déterminer (222) les tangentes auxdits points de contact de meulage potentiels, et à déterminer (224) lesdites profondeurs de meulage perpendiculairement auxdites tangentes.

6. Procédé selon l'une quelconque des revendications 1 à 5, dans lequel ladite étape de meulage (212, 214) dudit rail comporte les étapes consistant à meuler un premier point de contact ayant la profondeur la plus grande jusqu'audit profil de rail idéal pour meuler ledit rail.

7. Procédé selon la revendication 6, dans lequel ladite étape de meulage (212, 214) dudit rail comporte de plus les étapes consistant à redéterminer (238) les profondeurs de meulage des points de contact de meulage potentiels restants sur la base d'une prévision de l'effet du meulage dudit rail audit premier point de contact de meulage à l'aide d'un premier module, positionner un second module de meulage à un second point de contact de meulage ayant la profondeur de meulage suivante la plus grande par rapport à la profondeur de meulage dudit premier point de contact de meulage, et meuler ledit rail auxdits premier et second points de contact de meulage.

8. Procédé selon l'une quelconque des revendications 1 à 7, dans lequel lesdits modules de meulage sont mis en oeuvre par un véhicule de meulage (100) adapté pour se déplacer le long dudit rail (20) et ayant une vitesse de véhicule de meulage optimale prédéterminée le long dudit rail, ledit procédé comportant les étapes consistant à déterminer (228) le besoin de courant de meulage dudit rail à l'aide desdits modules de meulage, et augmenter (253, 230) la vitesse dudit véhicule de meulage pendant ladite étape de meulage si le besoin en courant desdits modules de meulage est plus faible qu'un besoin de courant optimal prédéterminé.

9. Procédé selon l'une quelconque des revendications 1 à 8, comportant les étapes consistant à déterminer (246) la quantité de métal qui va être enlevée dudit rail par meulage dudit rail au point sélectionné le long dudit profil à une vitesse de meulage normale prédéterminée, et réduire (248) ladite vitesse de meulage si la quantité de métal enlevée à ladite vitesse normale est plus grande que requis pour restaurer ledit rail dans ledit profil de rail idéal.

10. Procédé selon la revendication 9, comportant les étapes consistant à déterminer (250) si ladite vitesse de meulage réduite est plus faible qu'une vitesse requise prédéterminée avant de meuler ledit rail audit point sélectionné le long dudit profil de rail, et s'abstenir (247) de meuler ledit rail audit point si ladite vitesse de meulage réduite est plus faible que ladite vitesse requise prédéterminée.

11. Procédé selon l'une quelconque des revendications 1 à 10, comportant les étapes consistant à acquérir (202) une seconde pluralité d'images de données du profil réel dudit rail le long dudit intervalle après ledit meulage dudit rail, recalculer ledit profil représentatif de rail à partir de ladite seconde pluralité d'images de données, et comparer ledit profil de rail représentatif recalculé audit profil de rail idéal.

12. Procédé selon la revendication 11, dans lequel lesdites étapes de meulage et d'acquisition de ladite seconde pluralité d'images de données sont réalisées dans une première passe le long dudit intervalle dans une première direction le long dudit rail, et ladite étape consistant à remeuler est réalisée dans une seconde passe le long dudit intervalle dans une seconde direction opposée le long dudit rail.

13. Procédé selon l'une quelconque des revendications 1 à 12, dans lequel ledit profil de rail représentatif et ledit profil de rail idéal présentent chacun une paroi latérale intérieure respective et une surface de roulement supérieure, lesdites étapes de comparaison (208) dudit profil de rail représentatif avec ledit profil de rail idéal comportant les étapes consistant à aligner ledit profil de rail représentatif et les parois latérales intérieures de rail idéales, et aligner la surface de roulement du profil de rail idéal par rapport à la surface de roulement dudit profil de rail représentatif de telle sorte que tous les points du profil de rail idéal sont sur la surface de roulement du profil de rail représentatif ou en dessous de celle-ci.

14. Procédé selon l'une quelconque des revendications 1 à 13, dans lequel ledit rail présente une surface de champignon de rail, ladite étape d'acquisition (202) desdites images de données comportant l'étape consistant à représenter le rail à chacune desdites positions sous forme d'un certain nombre de points d'échantillonnage, ladite étape consistant à calculer (206) ledit profil de rail représentatif comportant les étapes consistant à déterminer si le nombre de points d'échantillonnage valides pour chaque dite position est adéquat pour représenter le profil de rail à cette position, et écarter les images de données dans lesquelles ledit nombre de points d'échantillonnage valides est déficient.
